# EUROPEAN PATENT SPECIFICATION

(11) **EP 1 131 233 B1**
(45) Date of publication and mention of the grant of the patent: **29.09.2004**
(21) Application number: 99909155.6
(22) Date of filing: 06.04.1999
(51) Int. Cl.: B60S 1/38

(54) **ACCESSORY TO CLEAN AND RECONDITION THE RUBBER PROFILE OF WINDSCREEN WIPER BLADES**
VORRICHTUNG ZUR REINIGUNG UND REPROFILIERUNG VON SCHEIBENWISCHERGUMMIPROFILEN
ACCESSOIRE DE NETTOYAGE ET DE REMISE EN ETAT DU PROFILE EN CAOUTCHOUC DES BALAIS D'ESSUIE-GLACE

(30) Priority: 10.11.1998 IT VE980045
(43) Date of publication of application: 12.09.2001
(73) Proprietor: Faggiotto, Elberino, 30027 S. Dona' di Piave (VE) (IT)
(72) Inventor: Faggiotto, Elberino, 30027 S. Dona' di Piave (VE) (IT)
(74) Representative: Petazzi, Guido
(86) International application number: PCT/IB1999/000586
(87) International publication number: WO 2000/027677

(56) References cited:
- EP-A- 0 800 973
- DE-A- 3 509 786
- DE-A- 4 110 799
- DE-U- 29 606 561
- GB-A- 2 182 550
- US-A- 5 426 895

## Description

### FIELD OF THE INVENTION

This invention concerns an accessory to clean and recondition the rubber profile of windscreen wiper arms as set forth in the main claim.

To be more exact, the invention concerns an accessory which can be used to remove from the profile of the windscreen wiper arms all impurities, dust or other dirt created while the windscreen wipers are inactive, or to regenerate the rubber profile by reconditioning it.

Even if the invention is described in its preferential application to windscreen wiper arms, it is not limited to this use, as it can be extended to other similar applications where it is necessary to perform scraping and/or regenerating operations of profiles of mainly rubber material used to remove dirt from a surface.

### BACKGROUND OF THE INVENTION

In the field of automobiles, motor transport and industrial vehicles, the state of the art includes motorized devices to clean the windscreen, called wipers or wiper arms.

The wiper arms have to work continuously to eliminate the water from the windscreen; in other cases, they have to clean not only water but also mud, sand or other encrustations.

Moreover, apart from the use to which they are subjected, they are exposed to great differences in temperature which with time compromise their efficiency.

When the wiper arms are inactive, all the impurities, for example particles of dust, sand, insects, etc., stick between the rubber and the windscreen, deforming the rubber profile which, when in contact with the surface of the windscreen, no longer adheres perfectly.

When the wipers have to be used again, they no longer clean perfectly precisely because of the dirt attached to the rubber.

Since the wiper no longer adheres perfectly to the windscreen, it does not remove the water completely, and limits the driver's visibility.

As soon as possible, users have to replace the wiper arms, which represents a considerable cost when replacements have to be made frequently.

Moreover, in the case of long journeys, this may be a problem if it is necessary to drive long distances with the wiper arms in a condition of poor efficiency, and is potentially dangerous for the driver due to the poor visibility when there is heavy rain.

The present Applicant is not aware of rapid, autonomous means to clean and regenerate wipers or wiper arms applied on industrial vehicles or other transport means.

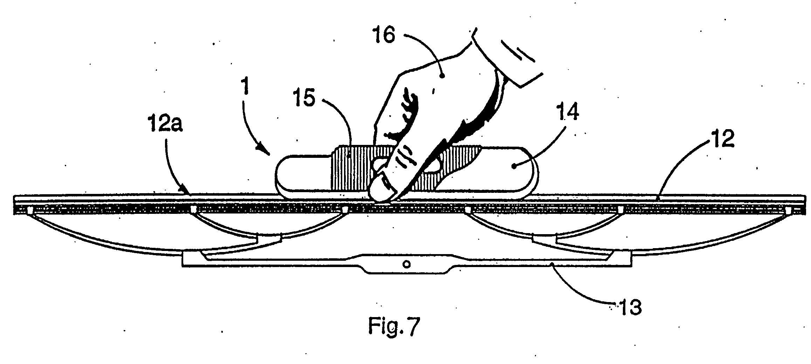

Only one device for cleaning windscreen wipers is known and described in the US patent US-A-5.426.895 (Figures 6 and 7). The device is composed of a support (12) with a groove (14) creating two smooth surfaces (16 and 18) and a frictional base (20). The base (20) has a series of projections (22) designed to detach and remove the dirt (28) from the edge of the windscreen wiper. In one embodiment of the device there are some filaments (36), shown on the sides (16 and 18), which are used to clean the sides of the windscreen wiper blade. The patent does not show how these projections are laid out and how they work on the sides of the windscreen wiper blade, whether they are opposed frontally or staggered, whether they are rigid or elastic. From figure 6, it can be seen that the geometry of the surface of these projections (34) in the direction of the blade transit channel is flat and for reason it is not coherent with the mechanical action of dirt removal from the windscreen wiper blade. Furthermore, the distance between the surfaces closest to these projections (34) is fixed, not adaptable. From the aforementioned patent, the Applicant has indicated the static condition of the projections (22 and 34) and the necessity for the operator to ensure constant mutual adaptations are made to the positions of the blade/cleaning means to guarantee the cleaning action on the sides of the said blade.

This invention has been designed and embodied to overcome the shortcomings of the state of the art and to obtain further advantages.

### SUMMARY OF THE INVENTION

The invention is set forth, relates to an accessory of the type disclosed in US-A-5 426 895 and characterized in the main claim, while the dependent claims describe other characteristics of the main embodiment.

The purpose of the invention is to provide an accessory which will permit users to clean the rubber profiles of windscreen wipers or wiper arms easily, rapidly and autonomously.

A further purpose is to maintain the wiper arms in a state of continuous efficiency, thus preserving the rubber surfaces better.

The invention allows not only to clean but also to regenerate the rubber profile by removing therefrom the particles of rubber and of dirt, so as to re-align the surfaces between the rubber and the glass, thus giving a perfect adherence and consequently allowing to clean the glass or windscreen in a permanently optimum manner.

The invention therefore allows the user to have the wiper arms permanently in a good condition, prolonging their working life and ensuring a high and constant level of efficiency; thus visibility is improved and consequently the safety of the driver of the vehicle even when there are long journeys involved and heavy, continuous rain.

The accessory according to the invention substantially consists of a containing body with a section substantially like an overturned U, open on one side and housing scraping and/or abrasive means.

The containing body can be manipulated by the user and advantageously has at least a gripping zone on its outer surface suitable to make it easy for the user to grip and use.

The body is suitable to be inserted with its open side onto the rubber profile of the wiper arm which is to be cleaned or regenerated, and then made to slide by the user along the profile, making the scraping and/or abrasive means contained inside cooperate with the part of the rubber profile which is to be cleaned.

In the invention, the scraping and/or abrasive means of the accessory are comprised by a series of blades located on two opposite rows so as to act simultaneously on both sides of the rubber profile, the blades being positioned facing each other in a herring-bone formation with the ends of the blades in one row converging towards the ends of the blades of the other row.

According to another variant, the accessory according to the invention has an appropriately protected spatula which can be used as a tool to remove the ice which has formed on the windscreen during winter.

### BRIEF DESCRIPTION OF THE DRAWINGS

The attached Figures are given as a non-restrictive example and show some preferential embodiments of the invention as follows:
- Fig. 1: is an overall side view of the accessory to clean and recondition the rubber profile of windscreen wiper arms according to the invention;
- Fig. 2: is a view from above of Fig. 1 showing the user-friendly gripping zone;
- Fig. 3: is a view from below of Fig. 1, that is to say, from its open side where the rubber profile is inserted, showing the dirt-removing elements of the accessory according to the invention;
- Fig. 4: is a longitudinal section of Fig. 1;
- Fig. 5: is a view from A of Fig. 3;
- Fig. 6: is a view from B of Fig. 3;
- Fig. 7: show how the accessory according to the invention is used to clean and recondition in the embodiments respectively of Fig. 1.

### DETAILED DESCRIPTION OF PREFERRED EMBODIMENTS

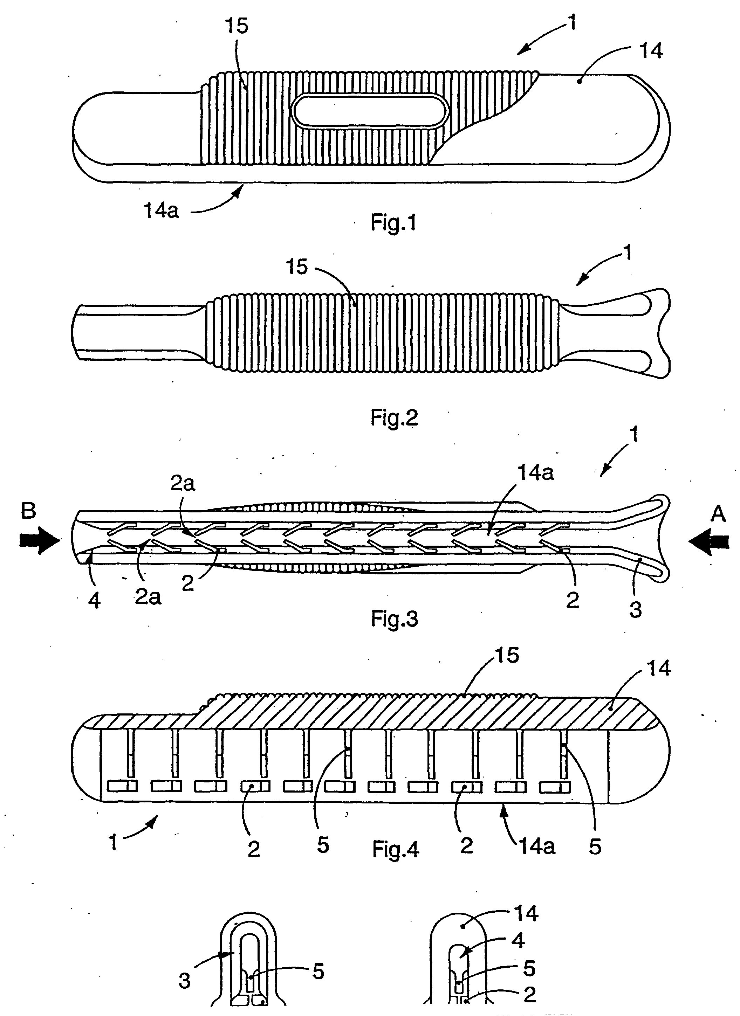

The accessory 1 according to the invention, used to clean and recondition the rubber profile 12 of a windscreen wiper arms 13, is shown in Fig. 1.

The accessory comprises a body 14, shaped substantially like an upside-down U with the lower side 14a open and the outer surface equipped with a knurling 15 which makes it easier for the user to grip and manipulate with his hand 16, in the manner shown in Fig. 7.

The accessory 1 has an anatomic shape which can be adapted to every type of requirement and application; the structure is made of various materials, for example rubber, plastic, PVC, polyethylene, carbon fiber, light alloy, etc., and can vary in size according to the use and the model of wiper arm 13 on which the accessory according to the invention is to be used.

The size of the accessory 1 is preferentially at least 150 mm in length, 30 mm in height and 20 mm in width.

These measurements should not be taken as restrictive, since it is obvious that they can vary according to the model of wiper arm 13 on which the accessory 1 is to be used.

The accessory 1 to clean and recondition the rubber profile 12 of windscreen wiper arms 13 is normally held by the thumb on one side and the other fingers on the opposite side (see Fig. 7), so that it can first be inserted and then tightened onto the profile 12 to be cleaned and regenerated.

The accessory 1, shown in its first embodiment in Figs. 1-6, comprises inside the body 14 a first plurality of blades 2 which, when the accessory 1 is in use, lie on a substantially horizontal plane.

The definition of horizontal plane, like the following definition of vertical plane, should be taken according to the use of the accessory 1 as shown in Fig. 7, since it is obvious that the accessory 1 can be used also by holding the wiper arm 13 vertically or inclined as desired.

In the case shown here, the blades 2 are arranged facing each other on two opposite rows (Fig. 3) with the respective ends 2a converging towards each other.

As shown in the Fig.3, each of the blades Include one part (2) extending along each side of the U-shaped in section and an end (2a) converging towards the end (2a) of the converging end of the opposite row.

The converging ends 2a define a direction of preferential insertion of the profile 12 of the wiper arms 13, and more exactly from the side indicated by the letter A in Fig. 3.

In correspondence with the insertion side, the accessory 1 comprises a funnel-shaped mouth 3 which facilitates the insertion of the accessory 1 onto the profile 12.

In a similar way, on the opposite side the accessory 1 has a flared profile 4 which facilitates the removal of the profile 12 after the scraping operation has been completed.

The blades 2 are advantageously made of slightly elastic material, so that, when the body 14 is applied onto the profile 12, by inserting the body 14 through the mouth 3, and then made to slide along the profile 12 in the correct direction of advance, the ends 2a of the blades 2 are forced to act through friction on both sides of the profile 12, removing impurities and other dirt present thereon.

The accessory 1 also comprises a second plurality of blades 5, also slightly elastic and lying on a substantially vertical plane when the accessory 1 is in use, which exert a scraping action on the outer edge 12a of the profile 12 of the wiper arm 13.

Both the blades 2 and the blades 5 can be made of metal or other suitable material, and are welded to the inner walls of the body 14 of the accessory 1.

## Claims

1. Accessory to clean and recondition the rubber profile (12) of windscreen wiper blades (13),comprising a containing and manipulation body (14) at least partly hollow and substantially U-shaped in section, having an open side (14a) and housing scraping and/or abrasive means (2, 5), said open side (14a) defining, in a substantially central position, an axial transit channel for at least part of said profile (12), said scraping and/or abrasive means consist of substantially elastic projections (2) arranged adjacent and symmetrical on one side and the other with respect to said transit channel in two substantially parallel rows defining a transit channel of a width less than the thickness of the profile (12), each of said projections (2) in one row being substantially opposite to a projection (2) in the opposite row, said rows of projections (2) being able to act simultaneously on a respective side of said profile (12), wherein the respective ends (2a) of one row of projections (2) converge towards the ends (2a) of the opposite projections (2) so as to define a transit channel able to be at least partly widened elastically during the passage of said profile (12) **characterized in that** the elastic projections (2) are elastic blades, said blades being arranged in a herring-bone pattern in which each of said blades include one part (2) extending along each side of the body U-shaped in section and an end (2a) converging towards the end (2a) of the converging end of the opposite row, said converging ends (2a) define a direction of insertion of the profile (12) of the wiper blade (13).

2. Accessory as in Claim 1, **characterized in that** it comprises a plurality of adjacent blades (5) arranged substantially on the bottom of the U-shaped profile of said body (14), substantially parallel to said transit channel and able to exert a scraping action on the outer edge (12a) of the profile (12).

3. Accessory as in any claim hereinbefore, **characterized in that**, on the opposite side with respect to their ends (2a), said blades (2) define a lead-in side for said profile (12) and that, in correspondence with said lead-in side, said body (14) has a funnel-shaped mouth (3) through which the profile (12) is inserted inside the transit channel of the body (14).

4. Accessory as in Claim 3, **characterized in that** in correspondence with said mouth (3) it has bow-shaped guide means (9) which act as guides for said profile (12).

5. Accessory as in Claim 1, **characterized in that**, on the outer surface of said body (14), it has knurling (15) which facilitates gripping and manipulation.

## Patentansprüche

1. Zubehörvorrichtung für die Reinigung und das Schleifen des Gummiprofils (12) der Scheibenwischerblätter (13), welche einen Aufnahme- und Manipulationskörper (14) umfasst, der zumindest teilweise hohl ist und einen im Wesentlichen U-förmigen Querschnitt aufweist, ausgestattet mit einer offenen Seite (14a) und ausgestattet mit Schab- und/oder Schleifvorrichtungen (2, 5), wobei die besagte offene Seite (14a) in einer im Wesentlichen zentralen Position einen axialen Durchgangskanal für zumindest einen Teil des besagten Profils (12) definiert, wobei die besagten Schab- und/oder Schleifvorrichtungen aus im Wesentlichen elastischen Vorständen (2) bestehen, die aneinander angrenzend und zueinander symmetrisch auf der einen und der anderen Seite des besagten Durchgangskanals in zwei im Wesentlichen parallelen Reihen angeordnet sind und die einen Durchgangskanal mit einer Breite definieren, die unterhalb der Breite des Profils (12) liegt, wobei jeder der besagten Vorstände (2) in einer Reihe angeordnet ist, die im Wesentlichen dem Vorstand (2) der gegenüber liegenden Reihe entgegen gesetzt ist, wobei die besagten Vorstände (2) in der Lage sind, gleichzeitig auf die entsprechende Seite des besagten Profils (12) einzuwirken, wobei die jeweiligen Enden (2a) einer Reihe von Vorständen (2) zu den Ende (2a) der entgegen gesetzten Vorstände (2) weisen, so dass sie einen Durchgangskanal bilden, der in der Lage ist, während des Durchgangs des besagten Profils (12) zumindest partiell elastisch geweitet zu werden, **gekennzeichnet durch** die Tatsache, dass die elastischen Vorstände (2) aus elastischen Lamellen bestehen, wobei die besagten Lamellen in einer Fischgrätenkonfiguration angeordnet sind, in der eine jede der besagten Lamellen einen Teil (2) umfasst, der sich entlang einer jeden Seite des U-förmigen Körpers erstreckt, und ein Ende (2a), das zum Ende (2a) des entgegen gesetzten Endes der entgegen gesetzten Reihe weist, wobei die besagten einander entgegen gesetzten Enden (2a) eine Richtung für die Einführung des Profils (12) des Scheibenwischerblatts (13) definieren.

2. Zubehörvorrichtung gemäß Anspruch 1, **gekennzeichnet durch** die Tatsache, eine Vielzahl von aneinander angrenzenden Lamellen (5) aufzuweisen, die im Wesentlichen an der Basis des besagten U-förmigen Körpers (14) angeordnet sind, im Wesentlichen parallel zu dem besagten Durchgangskanal und geeignet, eine Schabewirkung auf den äußeren Rand (12a) des Profils (12) auszuüben.

3. Zubehörvorrichtung gemäß einem beliebigen der vorausgehenden Ansprüche, **dadurch gekennzeichnet, dass** die besagten Lamellen (2) auf der ihren Enden (2a) gegenüber liegenden Seite eine Seite für die Aufnahme des besagten Profils (12) definieren, sowie durch die Tatsache, dass der besagte Körper (14) an der besagten Aufnahmeseite eine trichterförmige Öffnung (3) aufweist, durch die das Profil (12) in das Innere des Durchgangskanals des Körpers (14) eingeführt wird.

4. Zubehörvorrichtung gemäß Anspruch 3, **gekennzeichnet durch** die Tatsache, dass die besagte Zubehörvorrichtung an der besagten Öffnung (3) bogenförmige Führungsvorrichtungen (9) aufweist, die zur Führung des besagten Profils (12) dienen.

5. Zubehörvorrichtung gemäß Anspruch 1, **gekennzeichnet durch** die Tatsache, dass auf der Außenfläche des besagten Körpers (14) Rändelungen (15) vorhanden sind, die das Greifen und die Manipulation vereinfachen.

## Revendications

1. Un accessoire pour le nettoyage et la rectification du profil en caoutchouc (12) des essuie-glace (13), comprenant un corps de logement et de manipulation (14) au moins partiellement creux et ayant une section substantiellement en U, présentant un côté ouvert (14a) et comprenant des moyens de raclage et/ou abrasifs (2, 5), ledit côté ouvert (14a) déterminant, en une position substantiellement centrale, un canal de passage axial pour au moins une partie dudit profil (12), lesdits moyens de raclage et/ou abrasifs étant composés de saillies essentiellement élastiques (2) disposées d'une manière adjacente et symétrique sur un côté et sur l'autre, relativement audit canal de passage, en deux rangées substantiellement parallèles déterminant un canal de passage de largeur inférieure à l'épaisseur du profil (12), chacune desdites saillies (2) étant disposée sur une rangée, laquelle est substantiellement opposée à la saillie (2) sur la rangée opposée, lesdites rangées de saillies (2) étant en mesure d'agir simultanément sur le côté respectif dudit profil (12), dans lequel les extrémités respectives (2a) d'une rangée de saillies (2) convergent vers les extrémités (2a) des saillies opposées (2) de manière à déterminer un canal de passage pouvant être au moins partiellement élargi d'une manière élastique durant le passage dudit profil (12), **caractérisé par le fait que** les saillies élastiques (2) sont formées de lamelles élastiques, lesdites lamelles étant disposées en une configuration en arête de poisson dans laquelle chacune desdites lamelles comprend une partie (2) qui s'étend le long de chaque côté du corps à section en U et une extrémité (2a) qui converge vers l'extrémité (2a) de l'extrémité convergente de la rangée opposée, lesdites extrémités convergentes (2a) déterminant la direction d'introduction du profil (12) de l'essuie-glace (13).

2. Un accessoire comme celui de la revendication 1, **caractérisé par le fait qu'**il comprend une pluralité de lamelles adjacentes (5) disposées substantiellement à la base du profil en U dudit corps (14), substantiellement parallèle audit canal de passage et propre à exercer une action de raclage sur le bord extérieur (12a) du profil (12).

3. Un accessoire comme ceux de n'importe laquelle des revendications précédentes, **caractérisé par le fait que**, sur le côté opposé par rapport à leurs extrémités (2a), lesdites lamelles (2) déterminent un côté d'invitation pour ledit profil (12) et **par le fait que**, en correspondance dudit côté d'invitation, ledit corps (14) présente un orifice en forme d'entonnoir (3) par lequel le profil (12) est introduit à l'intérieur du canal de passage du corps (14).

4. Un accessoire comme celui de la revendication 3, **caractérisé par le fait que**, en correspondance dudit orifice (3), ledit accessoire présente des moyens de guidage en forme d'arc (9), lesquels servent de guide pour ledit profil (12).

5. Un accessoire comme celui de la revendication 1, **caractérisé par le fait que**, sur la surface extérieure dudit corps (14) sont présents des crénelages (15) lesquels facilitent la prise et la manipulation.
